# EUROPEAN PATENT APPLICATION

(11) **EP 4 603 307 A1**
(43) Date of publication of application: **20.08.2025**
(21) Application number: 24157864.0
(22) Date of filing: 15.02.2024
(51) Int. Cl.: B60G 7/00

(54) **LINK ARM FOR A CHASSIS OF A VEHICLE, CHASSIS FOR A VEHICLE, VEHICLE, METHOD FOR MANUFACTURING A LINK ARM FOR A CHASSIS OF A VEHICLE AND USE**

(71) Applicant: Volvo Car Corporation, 405 31 Göteborg (SE)
(72) Inventor: SKAGIUS, Adam, 40531 Göteborg (SE); NORDELL, Magnus, 40531 Göteborg (SE); WEGLIN, Joakim, 40531 Göteborg (SE)
(74) Representative: Maiwald GmbH

(57) **Abstract**

The disclosure relates to a link arm (20) for a chassis of a vehicle. The link arm (20) comprises a first connection portion (30) for pivotably supporting the link arm (20) on a vehicle structure, a second connection portion (30) for pivotably supporting the link arm (20) on a vehicle structure, and a body portion (34) structurally interconnecting the connection portions (30). The body portion (34) comprises a first part (40) comprising a first material and being produced by a first manufacturing process and a second part (42) comprising a second material and being produced by a second manufacturing process. The first part (40) and the second part (42) are structurally connected such that they conjointly form the body portion (34). The first material is different from the second material. Additionally or alternatively, the first manufacturing process differs from the second manufacturing process. Moreover, a chassis and a vehicle are described. Furthermore, a method for manufacturing a link arm (20) and a use are presented.

## Description

### TECHNICAL FIELD

The present disclosure relates to a link arm for a chassis of a vehicle. The link arm comprises a first connection portion for pivotably supporting the link arm on a vehicle structure. Moreover, the link arm comprises a second connection portion for pivotably supporting the link arm on a vehicle structure. Additionally, the link arm comprises a body portion structurally interconnecting the first connection portion and the second connection portion.

Moreover, the present disclosure is directed to a chassis for a vehicle and a vehicle.

Furthermore, the present disclosure relates to a method for manufacturing a link arm for a chassis of a vehicle and a use.

### BACKGROUND ART

In the context of the present disclosure, a chassis or rolling chassis is understood as a chassis of a motor vehicle such as a car, truck or bus. Amongst other things, the chassis comprises a suspension system of the vehicle to which the wheels of the vehicle may be mounted. Moreover, the chassis comprises parts of the supporting structure of the vehicle which do not form part of the vehicle's bodywork. Thus, the chassis and the vehicle's bodywork together form a vehicle structure. The chassis may as well be configured to carry parts of the drivetrain, e.g. a motor, gearbox or traction battery of the vehicle.

A link arm is understood as a part configured to movably connect at least two chassis components. Additionally or alternatively, a link arm may connect a chassis component to the vehicle's bodywork. A link arm may form part of a suspension system of the vehicle. Sometimes, a link arm is called an articulated arm, a jointed arm or a hinged arm.

Consequently, a link arm needs to have a certain mechanical stability in order to be SE:TOP
able to bear the loads occurring during operation of the associated vehicle. At the same time, the link arm needs to be compact such that sufficient space may be provided for the remaining components of the chassis and/or wheels mounted to the chassis. However, the mechanical stability and the compactness produce a certain conflict of objectives.

### SUMMARY

It is therefore an objective of the present disclosure to alleviate or solve this conflict of objectives, i.e. to provide a link arm which offers a comparatively high mechanical stability and is compact at the same time.

The problem is at least partially solved or alleviated by the subject matter of the independent claims of the present disclosure, wherein further examples are incorporated in the dependent claims.

According to a first aspect, there is provided a link arm for a chassis of a vehicle. The link arm comprises a first connection portion for pivotably supporting the link arm on a vehicle structure. Moreover, the link arm comprises a second connection portion for pivotably supporting the link arm on a vehicle structure. Additionally, the link arm comprises a body portion structurally interconnecting the first connection portion and the second connection portion. The body portion comprises a first part comprising a first material and being produced by a first manufacturing process and a second part comprising a second material and being produced by a second manufacturing process. The first part and the second part are structurally connected such that the first part and the second part conjointly form the body portion. Moreover, the first material is different from the second material. Additionally or alternatively, the first manufacturing process differs from the second manufacturing process. Due to the fact that the body portion is conjointly formed by the first part and the second part, wherein the first part and the second part differ in terms of material and/or manufacturing process, the link arm according to the present disclosure may have a comparatively high mechanical stability and may be compact at the same time. In contrast thereto, known link arms are produced from one single material using one single manufacturing process, e.g. from aluminum material using a casting process, from steel material using a casting process or from steel material using a forging process. Thus, using two parts for forming the body portion offers an increased flexibility concerning the choice of materials and/or the choice of manufacturing processes such that for each of the first part and the second part the most suitable material may be used and the most suitable manufacturing process may be chosen. The choice of the material and the manufacturing process for the first part is generally independent from the choice of the material and the manufacturing process for second part. Thus, using the first part and the second part, the body portion of the link arm and, thus, the link arm as a whole, may be tailored to a specific application such that it is both mechanically stable and compact.

Forming the body portion of the link arm conjointly by the first part and the second part is also advantageous from a manufacturing perspective. This is due to the fact that producing the first part, producing the second part and joining the first part and the second part in order to form the body portion of the link arm may be easier from a manufacturing perspective than integrally forming the link arm of a single material using a single manufacturing process. Moreover, due to the fact that the body portion of the link arm is formed by the first part and the second part alleviates design constraints resulting from the respective manufacturing processes. This is especially the case when comparing the link arm according to the present disclosure to a known link arm being integrally formed from a single material using a single manufacturing process.

In an example, the first connection portion may comprise a first support opening extending along a first axis. The first support opening may be configured for pivotably supporting the link arm. Additionally or alternatively, the second connection portion may comprise a second support opening extending along a second axis. The second support opening is configured for pivotably supporting the link arm. Optionally, the link arm may comprise one or more further connection portions comprising a further support opening extending along a further axis. The further support opening may be configured for pivotably supporting the link arm.

In an example, the first material is a metal material or a plastics material or a fiber-reinforced plastics material or a metal-reinforced plastics material. Additionally or alternatively, the second material is a metal material or a plastics material or a fiber-reinforced plastics material or a metal-reinforced plastics material. Consequently, an appropriate material for a specific application may be chosen for the first part and the second part.

According to an example, one of the first part and the second part is made from a steel material, i.e. the first material or the second material is a steel material. The respective other one of the first part and the second part is made from an aluminum material, i.e. the respective other one of the first material and the second material is an aluminum material.

According to another example, one of the first part and the second part is made from a plastics material such as carbon-fiber reinforced plastics or glass-fiber reinforces plastics, i.e. the first material or the second material is a plastics material such as carbon-fiber reinforced plastics or glass-fiber reinforces plastics. The respective other one of the first part and the second part is made from an aluminum material or a steel material, i.e. the respective other one of the first material and the second material is an aluminum material or a steel material.

According to an example, the first manufacturing process comprises casting or forging or pressing or molding or extruding. Additionally or alternatively, the second manufacturing process comprises casting or forging or pressing or molding or extruding. Consequently, an appropriate manufacturing process for a specific application may be chosen for the first part and the second part.

According to an example, one of the first part and the second part is made by casting, i.e. the first manufacturing process or the second manufacturing process is casting. The respective other one of the first part and the second part is made by pressing sheet metal or by sheet metal forming, i.e. the respective other one of the first manufacturing process and the second manufacturing process is sheet metal pressing or sheet metal forming. In this context, the casting process may be high-pressure die casting (HPDC) or low pressure die casting (LPDC).

According to an example, one of the first part of the second part is made by casting, i.e. the first manufacturing process or the second manufacturing process is casting. The respective other one of the first part and the second part is made by molding, e.g. injection molding or resin transfer molding, i.e. the respective other one of the first manufacturing process and the second manufacturing process is molding, e.g. injection molding or resin transfer molding.

It is noted, that the above-mentioned examples may be combined. Thus, for example, the first part may be made from an aluminum material by casting. This means that the first material is an aluminum material and the first manufacturing process is casting. The second part may be made from a steel material by sheet metal forming. This means that the second material is a steel material and the second manufacturing process is a sheet metal forming process.

In an example, the first part and the second part are structurally connected along an outer outline of the first part and/or of the second part. Additionally or alternatively, the first part and the second part are structurally connected at a location remote from an outer outline of the first part and/or the second part. In this context, an outer outline of the first part and/or the second part is a line that marks the outer limit of the first part and/or the second part. Thus, if the first part and the second part are structurally connected along an outer outline of the first part and/or of the second part, the first part and the second part are structurally connected adjacent to the outer outline. This allows for a mechanically stable connection of the first part and the second part. It is also possible that the first part and the second part are structurally connected at a location remote from the outer outline of the first part and/or the second part. This means that the first part and the second part are structurally connected at a location lying within the outer outline of the first part and or the second part. Also in such a location a mechanically stable connection between the first part and the second part may be achieved. In case the above-mentioned alternatives are combined, i.e. if the first part and the second part are structurally connected both along the outer outline and at the location remote from the outer outline, the connection between the first part and the second part is particularly stable.

According to an example, the first part and the second part may be structurally connected via one or more of a screw, a rivet, a weld seam, an adhesive joint, and a clamping connection. In another example, the first part and the second part may be structurally connected by clinching. These connection means may be used both adjacent to an outer outline of the first part and/or the second part and at a location remote from the outer outline of the first part and/or the second part. If one or more screws are used for connecting the first part and the second part, the screws may be formed as self-cutting screws. Any of the above-mentioned connection means generates a mechanically stable and reliable connection between the first part and the second part. Additionally, all of the above-mentioned connection means may be used or applied in a reliable and efficient manner.

In an example, the link arm further comprises at least one connection interface for pivotably supporting the link arm on a vehicle structure. The at least one connection interface is conjointly formed by the first part and the second part. The connection interface may be formed as a support opening. The connection interface may be provided on the first connection portion or the second connection portion. It is understood, that the link arm may comprise more than one connection interface for pivotably supporting the link arm on a vehicle structure. The fact that the at least one connection interface is conjointly formed by the first part and the second part is advantageous from a mechanical point of view since forces and torques that are transferred via the at least one connection interface may be directly supported on both the first part and the second part. This enhances the mechanical stability of the link arm.

According to an example, a support interface for supporting a spring is provided on the body portion. This is especially useful if the link arm forms part of a suspension system. The support interface for supporting the spring may be integrally formed on the body portion, i.e. on the first part and/or on the second part. Consequently, loads resulting from an operation of the spring may be reliably supported by the body portion. Moreover, having the support interface formed integrally on the body portion is structurally simple since assembly steps are avoided. In case one of the first part and the second part is formed by casting, the support interface may be formed on the casted part. This allows to generate a support interface having a specific geometry in an efficient manner.

In an example, the first part and the second part enclose a hollow. This means that a cavity is conjointly formed by the first part and the second part. Optionally, the hollow may be fully or partially filled with a material different from the first part and the second part, e.g. with foam. A hollow body portion of a link arm offers a very good combination of mechanical stability and low weight. At the same time, generating such a hollow conjointly by a first part and a second part is comparatively simple form a manufacturing point of view. This is especially the case when comparing the link arm according to the present disclosure to a known link arm which is integrally formed from a single material using a single manufacturing process.

In an example, the body portion comprises an aerodynamic deflection feature. This means that the aerodynamic deflection feature is integrally formed on the body portion. Thus, the aerodynamic deflection feature is integrally formed by the first part and/or the second part. Since the body portion structurally connects the connection portions of the link on, the aerodynamic deflection feature is a portion of a structural part. This implies that the deflection feature may fulfill a structural functionality, i.e. the deflection feature may be configured to support loads which need to be supported by the link arm. The aerodynamic deflection feature is configured to influence a flow of surrounding air in a desired manner. For example, the surrounding air may be guided in a desired direction. Additionally or alternatively, a flow direction of the flow of surrounding air may be modified using the aerodynamic deflection feature.

In an example, the aerodynamic deflection feature is formed by a plate-shaped portion of the first part and/or the second part. Such an aerodynamic deflection feature is particularly useful for guiding a flow of surrounding air.

In another example, the aerodynamic deflection feature comprises one or more guiding elements such as guiding ribs or guiding depressions. Such guiding elements may be used for guiding a flow of surrounding air and/or for actively influencing a flow direction of the flow of surrounding air.

In an example, the first part and/or the second part comprises a plate-shaped portion comprising a reinforcement structure. Such a configuration offers the possibility to combine a light weight of the first part and/or the second part with a comparatively high mechanical stiffness. In this context, the mechanical stiffness results from the plate-shaped portion and the associated reinforcement structure. The comparatively low weight results from the fact that both the plate-shaped portion and the reinforcement structure may be formed using comparatively little material, especially when comparing the first part and/or second part to a solid part. An example of a reinforcement structure is one or more stiffening ribs.

In an example, the first part and/or the second part is tray-shaped or cup-shaped. This means that the first part and/or the second part is formed as an open receptacle. This is advantageous from a manufacturing perspective since tray-shaped or cup-shaped parts may be efficiently produced using sheet-metal forming, casting or forging. This is especially the case if the cup-shaped part or tray-shaped part does not comprise any undercut on its inside. In such a case, tools or molds used for forming the first part and/or the second part may be comparatively simple and, thus, may be used in a particularly efficient way.

According to a second aspect, there is provided a chassis for a vehicle. The chassis comprises at least one link arm according to the present disclosure. As has been explained before, the link arm according to the present disclosure may have a comparatively high mechanical stability and may be compact at the same time. This is especially the case when comparing the link arm according to the present disclosure to known link arms produced from one single material using one single manufacturing process. Due to this, also the chassis comprising the link arm is mechanically stable and compact at the same time. It is noted that in the chassis according to the present disclosure, one or more link arms according to the present disclosure may be used. In an example, the chassis is configured to support four road wheels of a vehicle. In this case, a link arm according to the present disclosure may be used for supporting each of the four road wheels, i.e. the chassis may comprise a total of four link arms according to the present disclosure. According to an alternative, only two link arms according to the present disclosure are used in the chassis. These link arms may be used for supporting the two rear wheels of the vehicle. According to a further alternative, two link arms according to the present disclosure are used in the chassis and these link arms are used for supporting the two front wheels.

According to a third aspect, there is provided a vehicle comprising a chassis according to the present disclosure and/or a link arm according to the present disclosure. As has been explained before, the link arm according to the present disclosure and the chassis according to the present disclosure may have a comparatively high mechanical stability and may be compact at the same time. Due to this, also the vehicle comprising the link arm and/or the chassis is mechanically stable and compact at the same time. In this context, the compactness of the chassis and/or the link arm may as well be used in order to provide space for other components of the vehicle, such as drivetrain components or a passenger cabin.

In an example, the vehicle further comprises an underfloor panel arranged adjacent to the link arm. A gap between the underfloor panel and the link arm has a maximum width of 10 cm. In an example, the maximum width is 7 cm. In another example, the maximum width is 5 cm. in still another example, the maximum width is 2.5 cm. Thus, a gap between the underfloor panel and the link arm is comparatively small. This is advantageous from an aerodynamic perspective since a comparatively small gap reduces the drag occurring during operation of the vehicle. It is noted that the link arm may optionally comprise an aerodynamic deflection feature which leads to a further reduction of the drag.

According to a fourth aspect of the present disclosure, there is provided a method for manufacturing a link arm for a chassis of a vehicle. The link arm comprises a first connection portion for pivotably supporting the link arm on a vehicle structure. Moreover, the link arm comprises a second connection portion for pivotably supporting the link arm on a vehicle structure. Additionally, the link arm comprises a body portion structurally interconnecting the first connection portion and the second connection portion. The method comprises:
- providing a first part comprising a first material and being produced by a first manufacturing process,
- providing a second part comprising a second material and being produced by a second manufacturing process, wherein the first material is different from the second material and/or wherein the first manufacturing process differs from the second manufacturing process, and
- structurally connecting the first part and the second part such that the first part and the second part conjointly form the body portion.

Since the body portion is conjointly formed by the first part and the second part, the link arm manufactured in accordance with the method according to the present disclosure may have a comparatively high mechanical stability and may be compact at the same time. Using two parts for forming the body portion offers an increased flexibility concerning the choice of materials and/or the choice of manufacturing processes such that for each of the first part and the second part the most suitable material may be used and the most suitable manufacturing process may be chosen. The choice of the material and the manufacturing process for the first part is generally independent from the choice of the material and the manufacturing process for the second part. In other words, using the first part and the second part, the body portion of the link arm and, thus, the link arm as a whole, may be tailored to a specific application such that it is both mechanically stable and compact. Using the method according to the present disclosure is also advantageous from a manufacturing perspective. This is due to the fact that producing the first part, producing the second part and joining the first part and the second part in order to form the body portion of the link arm may be easier from a manufacturing perspective than integrally forming the link arm of a single material using a single manufacturing process. Moreover, due to the fact that the body portion of the link arm is formed by the first part and the second part alleviates design constraints resulting from the respective manufacturing processes. This is especially the case when comparing the link arm according to the present disclosure to a known link arm being formed integrally from a single material using a single manufacturing process.

According to a fifth aspect of the present disclosure, there is provided a use of a first part comprising a first material and being produced by a first manufacturing process, and a second part comprising a second material and being produced by a second manufacturing process, for forming a body portion of a link arm for a chassis of a vehicle. The body portion structurally interconnects a first connection portion of the link arm and a second connection portion of the link arm. Each of the first connection portion and the second connection portion is configured for pivotably supporting the link arm on a vehicle structure. The first material is different from the second material and/or the first manufacturing process differs from the second manufacturing process. Since the first part and the second part are used to conjointly form the body portion, the link has a comparatively high mechanical stability and may at the same time be compact. Using two parts for forming the body portion offers an increased flexibility concerning the choice of materials and/or the choice of manufacturing processes such that for each of the first part and the second part the most suitable material may be used and the most suitable manufacturing process may be chosen. The choice of the material and the manufacturing process for the first part is generally independent from the choice of the material and the manufacturing process for second part. In other words, using the first part and the second part, the body portion of the link arm and, thus, the link arm as a whole, may be tailored to a specific application such that it is both mechanically stable and compact. Using two parts, i.e. the first part and the second part, for forming the body portion of the link arm is also advantageous from a manufacturing perspective. This is due to the fact that producing the first part, producing the second part and joining the first part and the second part in order to form the body portion of the link arm may be easier from a manufacturing perspective than integrally forming the link arm of a single material using a single manufacturing process. Moreover, due to the fact that the body portion of the link arm is formed by the first part and the second part alleviates design constraints resulting from the respective manufacturing processes. This is especially the case when comparing the link arm according to the present disclosure to a known link arm being integrally formed from a single material using a single manufacturing process.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure having a chassis according to the present disclosure comprising a link arm according to the present disclosure, wherein the link arm is produced in using a method according to the present disclosure,
- Figure 2: schematically shows a portion of a wheel suspension system of the vehicle of Figure 1,
- Figure 3: shows a link arm according to a first example of the present disclosure in a perspective view,
- Figure 4: shows the link arm of Figure 3 in a top view,
- Figure 5: shows the link arm of Figures 3 and 4 in a bottom view,
- Figure 6: shows the first part of the link arm of Figures 3 to 5 in a bottom view, wherein the second part is not shown,
- Figure 7: shows a link arm according to a second example of the present disclosure in a perspective view,
- Figure 8: shows the link arm of Figures 7 along direction VII in Figure 7,
- Figure 9: shows a link arm according to a third example of the present disclosure in a perspective view,
- Figure 10: schematically illustrates the design principle of the link arms of Figures 3 to 9,
- Figure 11: schematically illustrates the design principle of a link arm according to a fourth example,
- Figure 12: shows a link arm according to a first variant of the fourth example in a condition in which the link arm is mounted in a vehicle,
- Figure 13: shows a link arm according to a second variant of the fourth example of the present disclosure in a condition in which the link arm is mounted in a vehicle,
- Figure 14: shows a link arm according to a third variant of the fourth example in a top view, and
- Figure 15: shows the link arm of Figure 14 in a sectional view in plane XV-XV in Figure 14.

### DETAILED DESCRIPTION

The Figures are merely schematic representations and serve only to illustrate examples of the disclosure. Identical or equivalent elements are in principle provided with the same reference signs.

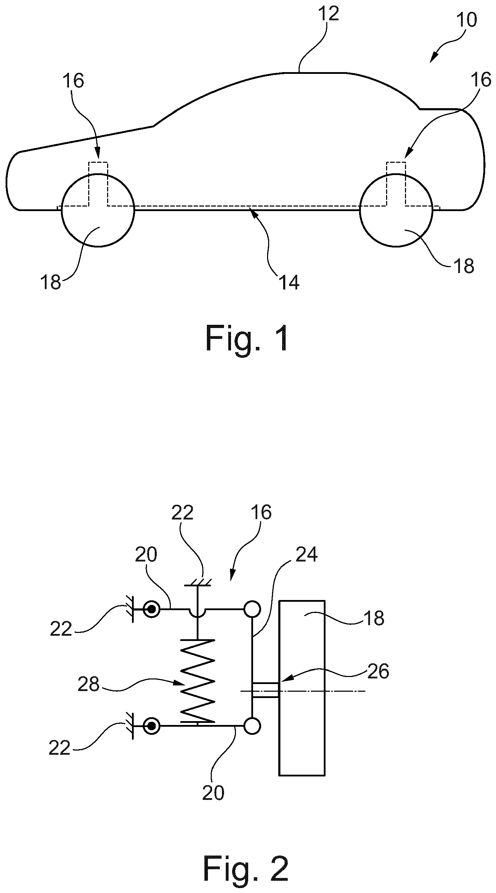

Figure 1 shows a vehicle 10.

The vehicle 10 is generally composed of a vehicle body 12 and a chassis 14.

In simplified words, the chassis 14 may be imagined as a structural vehicle base carrying the vehicle body 12, even though, in reality, the vehicle body 12 may at least partially be self-supporting and serve as a structural part of the vehicle 10.

The chassis 14 comprises a wheel suspension system 16 for each of the four road wheels 18 of the vehicle 10. Thus, each of the four road wheels 18 is supported on the chassis 14 and on the vehicle body 12 via an associated wheel suspension system 16.

One wheel suspension system 16 is schematically shown in Figure 2 in a simplified manner. For example, components of a steering system are not shown even though the wheel suspension system 16 may provide a steering functionality.

The wheel suspension system 16 and, thus, the chassis 14, comprises two link arms 20 which are pivotably supported on a vehicle structure 22 which is only represented schematically and which may be formed by a component of the chassis 14 or by a component of the vehicle body 12.

In the example of Figure 2, both link arms 20 extends substantially in parallel. Moreover, the link arms 20 are connected via a wheel carrier 24, which may also be called a knuckle. More precisely, a first end of the wheel carrier 24 is pivotably connected to an end of the upper link arm 20 which is located opposite the end of the same link arm 20 which is connected to the vehicle structure 22. A second end of the wheel carrier 24 is pivotably connected to an end of the lower link arm 20 wherein this end of the lower link arm 20 is located opposite the end of the same link arm 20 which is connected to the vehicle structure 22.

Moreover, the wheel carrier 24 comprises a wheel connection interface 26 at which the wheel 18 is rotatably supported.

The wheel suspension system 16 of Figure 2 also comprises a spring 28. A lower end of the spring 28 is supported on the lower link arm 20. An upper end of the spring 28 is supported on the vehicle structure 22.

Consequently, in the representation of Figure 2, the wheel 18 may move upwards when compressing the spring 28.

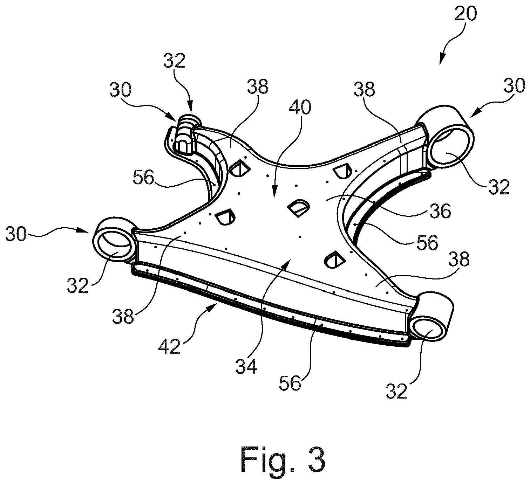

Figures 3 to 6 show a first example of a link arm 20 which may for example be used as a lower link arm 20 in the wheel suspension system 16 of Figure 2. Alternatively, the link arm 20 of Figures 3 to 6 may be used in a wheel suspension system 16 in which the spring 28 is not directly supported on the link arm 20.

The link arm 20 comprises a total of four connection portions 30, wherein each of the connection portions 30 is configured for pivotably supporting the link arm 20 on the vehicle structure 22. The four connection portions 30 may be numbered as first connection portion 30, second connection portion 30, third connection portion 30 and fourth connection portion 30.

In the example of Figures 3 to 6, each of the connection portions 30 comprises a connection interface 32 which is configured for pivotably supporting the link arm 20 on the vehicle structure 22. The connection interfaces 32 are formed by connection openings configured to receive a corresponding bolt in a condition in which the link arm 20 is mounted within the chassis 14.

The link arm 20 also comprises a body portion 34 structurally interconnecting all the connection portions 30.

The body portion 34 comprises a middle section 36 which in the view of Figure 3 to 6 appears plate-shaped even though, in reality it is box-shaped.

Furthermore, the body portion 34 comprises a total of four extension sections which may be described as being leg-shaped and which extend between the middle section 36 and one of the connection portions 30 respectively.

In the present example, the link arm 20, more precisely the body portion 34 of the link arm 20 is formed conjointly by a first part 40 and a second part 42.

The first part 40 is tray-shaped and is made from cast aluminum. Consequently, a first material of the first part 40 is aluminum and a first production process used for producing the first part 40 is casting.

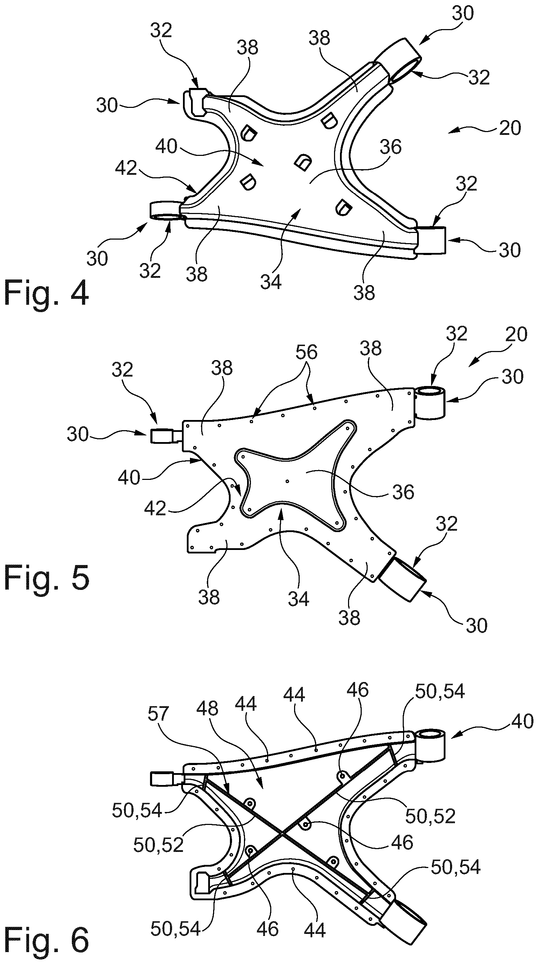

Along an outline of the first part 40, a plurality of connection holes 44 is provided (cf. Figure 6).

Moreover, a total of five connection holes 46 are provided remote from the outer outline, i.e. at the location within the outer outline.

The connection holes 44, 46 are configured to receive a connection screw as will be explained further below. For reasons of better visibility, only some of the connection holes 44, 46 are provided with a reference sign.

Moreover, in an inner portion of the tray-shaped first part 40, a reinforcement structure 48 is provided.

In the example of Figures 3 to 6, the reinforcement structure comprises a plurality of ribs 50 which form integral portions of the first part 40, i.e. the ribs 50 are formed when casting the first part 40. More precisely, the plurality of ribs comprises two main ribs 52 which are arranged inside the tray-shaped first part 40 such that they form a cross. At each end of one of the main ribs 52, an end rib 54 is provided which is oriented transverse to the associated main rib 52.

In the present example, the reinforcement structure 48 is provided on a plate-shaped bottom portion of the tray-shaped first part 40.

The second part 42 is substantially plate-shaped. The second part 42 is a sheet metal part made from steel. More precisely, the second part 42 is produced by pressing a sheet made of steel. Consequently, a second material of the second part 42 is steel and a second production process of the second part 42 is sheet-metal pressing or sheet-metal forming.

The second part 42 is formed such that it covers the opening of the tray-shaped first part 40. In other words, the tray-shaped first part 40 is closed using the second part 42.

The first part 40 and the second part 42 are structurally connected such that the first part 40 and the second part 42 conjointly form the body portion 34.

In the present example, the first part 40 and the second part 42 are connected using a plurality of connection screws 56 which are only represented schematically. One connection screw is placed in each of the connection holes 44, 46 and is screwed into the second part 42. Thus, the first part 40 and the second part 42 are connected in the structurally stable manner. This connection extends along the outline of the first part 40 and the second port 42 and also at positions remote from the outline.

Moreover, the first part 40 and the second part 42 enclose a hollow 57. This means that the space essentially formed by the tray-shape of the first part 40, is filled with air.

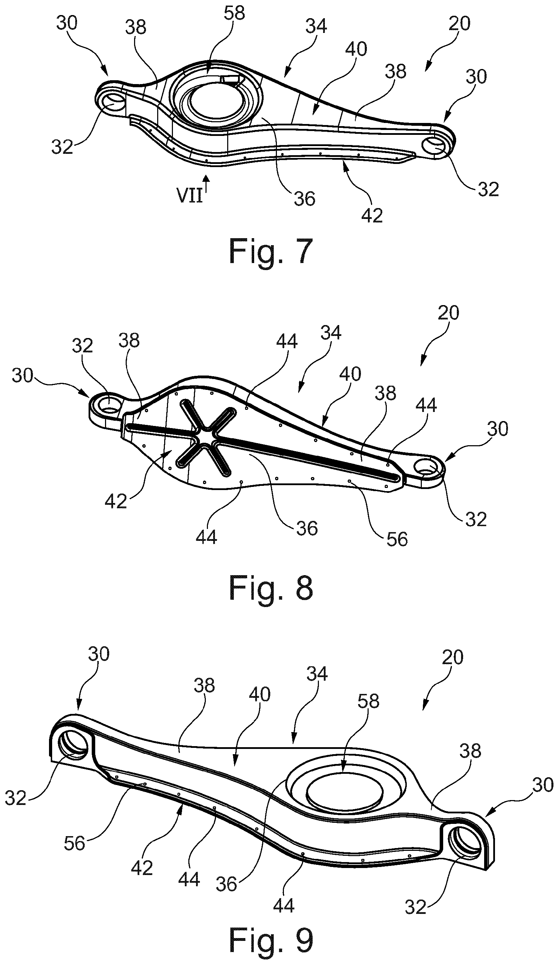

A second example of a link arm 20 is shown in Figures 7 and 8. In the following, only the differences with respect to the example of Figures 3 to 6 will be explained. Beyond that, reference is made to the above explanations.

The link arm of Figures 7 and 8 only comprises two connection portions 30 and, thus, only two connection interfaces 32.

The middle section 36 of the body portion 34 is round or elliptical, wherein two extension sections 38 extent on opposite sides of the middle section 36.

As before, the first part 40 is tray-shaped and is made from cast aluminum.

The second part 42 is plate-shaped and is made from pressed steel.

As in the first example, the first part 40 and the second part 42 are connected using a plurality of connection screws 56.

In contrast to the first example, the body portion 34 of the link arm 20 of the example of Figures 7 and 8, comprises a support interface 58 for supporting a spring. The support interface 58 is formed as a generally ring-shaped recess on the first part 40. Moreover, the ring-shaped recess has a specific geometry which is configured to mate with an associated end of a spring to be supported on the support interface 58.

A further difference between the first example and the second example is that in the second example, the second part 42 comprises a reinforcement structure which is formed by ribs being arranged substantially in a star-shape.

Figure 9 shows a third example of a link arm 20. As before, only the differences with respect to the above examples are explained.

Otherwise, reference is made to the above explanations.

The link arm 20 of Figure 9 is a variant of the link arm of Figures 7 and 8.

In this context, the link arm of Figure 9 differs from the link arm 20 of Figures 7 and 8 in that each of the two connection interfaces 32 is conjointly formed by the first part 40 and the second part 42.

To this end, portions of the second part 42, which is made from pressed sheet metal, more precisely from steel, are folded onto the portions of the first part 40 on which the openings of the connection interfaces 32 are formed. A portion of the second part 42 is even folded into each of the openings.

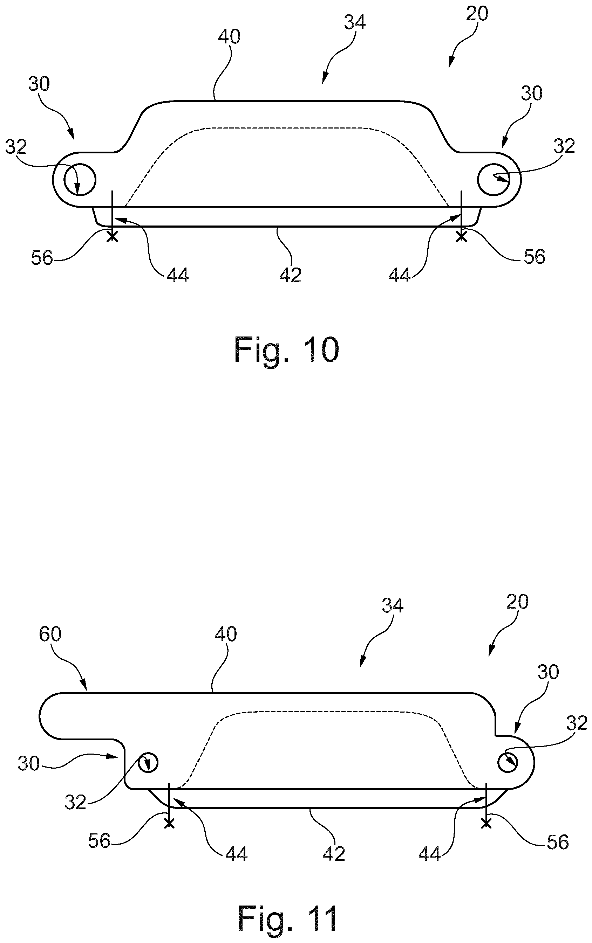

Figure 10 schematically summarizes the general design of the different examples of the link arm 20 as shown in Figures 3 to 9. In all of these examples, the first part 40 is tray-shaped and is made from cast aluminum.

The second part 42 is a sheet metal part made from steel and is generally plate-shaped.

Figure 11 schematically shows a link arm 20 according to a fourth example.

The link arm 20 of Figure 11 is a modification of the link arm 20 of Figure 10. However, in contrast to the link arm 20 of Figure 10, the link arm of Figure 11 comprises an aerodynamic deflection feature 60 provided as an integral portion of the first part 40.

In the present example, the aerodynamic deflection feature 60 is a plate-shaped extension of the link arm 20.

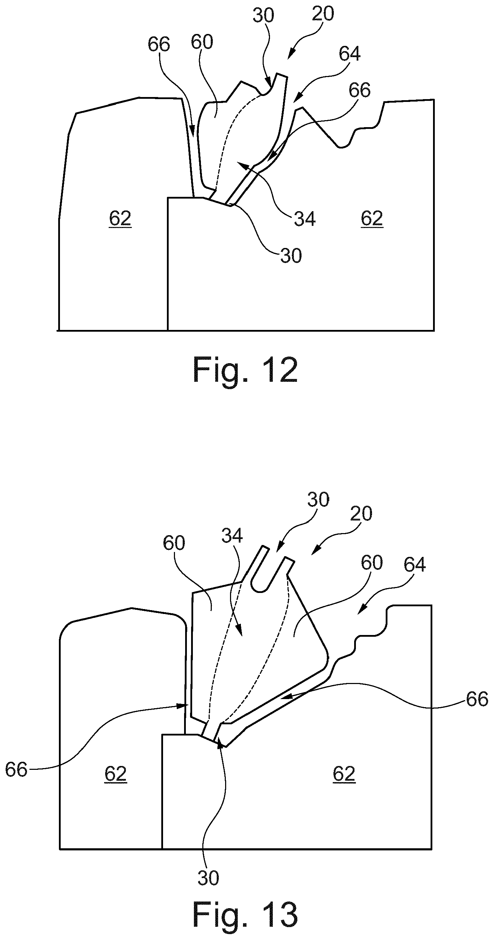

Figures 12 and 13 schematically show a use of such a link arm 20 having an aerodynamic deflection feature 60 and mounted in a vehicle 10.

In Figures 12 and 13 a bottom view of a portion of the vehicle is represented. In both figures, the underfloor of the vehicle 10 is equipped with two underfloor panels 62 which are only represented schematically.

The underfloor panels 62 form a cut-out 64 in which the link arm 20 is arranged.

This cut out is substantially closed by the link arm 20, more precisely by the aerodynamic deflection feature 60 of the link arm 20.

This has the effect, that a gap 66 between the underfloor panel 62 and the link arm 20 has a maximum width 2,5 cm. Consequently, an underside of the vehicle 10 is practically closed, even in a zone where the wheel suspension system 16 is provided.

In order to emphasize the design and functionality of the aerodynamic deflection feature 60, a form of link arms 20 which do not comprise an aerodynamic deflection feature 60 are represented in Figure 12 and 13 using dashed lines.

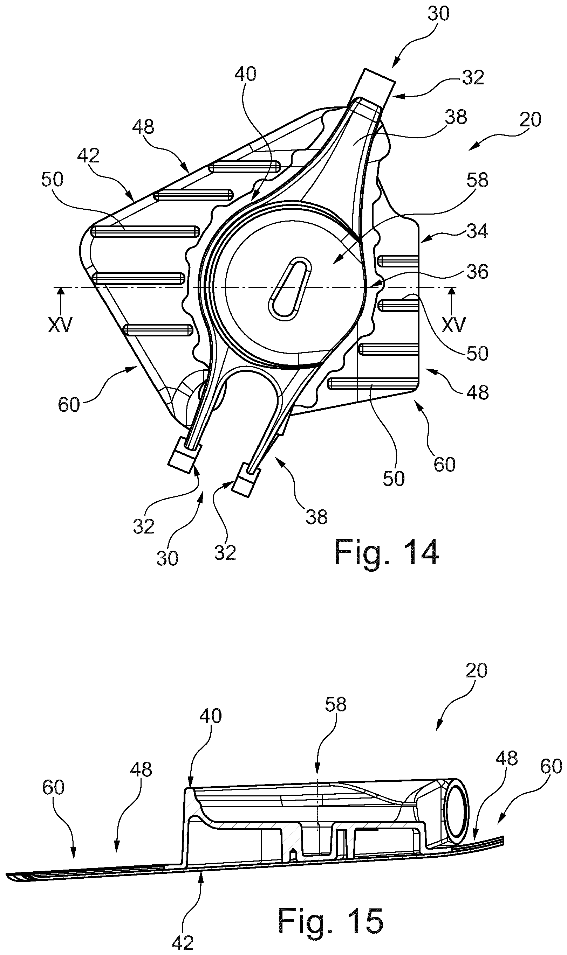

Figures 14 and 15 show a link arm 20 of the type as shown in Figure 11 in more detailed representations. The link arm 20 of Figures 14 and 15 may be mounted in a vehicle in the same manner as shown in Figures 12 and 13. Thus, the orientation of the link arm 20 in Figure 15 corresponds to an orientation of the link arm 20 when mounted in the vehicle 10.

As has already been mentioned in connection with Figure 11, also the link arm 20 of Figures 14 and 15 comprises an aerodynamic deflection feature 60, more precisely two aerodynamic deflection features 60.

In the example of Figures 14 and 15, the aerodynamic deflection features 60 are conjointly formed by the first part 40 and the second part 42. In this respect, the example of Figure 14 and 15 differs from the schematic representation of Figure 11.

The aerodynamic deflection features 60 are provided at a lower side of the link arm 20 if the link arm 20 is mounted in the vehicle 10.

As before, the aerodynamic deflection features 60 are plate-shaped extension of the link arm 20. However, in the example of Figures 14 and 15 a reinforcement structure 48 comprising a plurality of ribs 50 extending substantially in parallel is provided on the sections of the body portion 34 forming the aerodynamic deflection features 60.

The link arm 20 of Figures 14 and 15 also comprises a support interface 58 for supporting a spring.

Moreover, the first part is casted from aluminum material and the second part 42 is a sheet metal part made from steel.

The link arms 20 of all above-mentioned examples may be manufactured using a method for manufacturing a link arm for a chassis of a vehicle.

In a first step of this method, the first part 40 is provided. As has been mentioned before, the first part 40 comprises a first material and is produced by a first manufacturing process.

In a second step of the method, the second part 42 is provided. As has been mentioned before, the second part 42 comprises a second material and is produced by a second manufacturing process.

The first material is different from the second material and the first manufacturing process differs from the second manufacturing process.

Thereafter, in a third step, the first part 40 and the second part 42 are structurally connected such that the first part 40 and the second part 42 conjointly form the body portion 34.

Put otherwise, in all of the above-mentioned examples, a first part 40 comprising a first material and being produced by a first manufacturing process, and a second part 42 comprising a second material and being produced by a second manufacturing process, are used for forming a body portion 34 of a link arm 20 for a chassis 14 of a vehicle 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: vehicle body
- 14: chassis
- 16: wheel suspension system
- 18: wheel
- 20: link arm
- 22: vehicle structure
- 24: wheel carrier
- 26: wheel connection interface
- 28: spring
- 30: connection portion
- 32: connection interface
- 34: body portion
- 36: middle section
- 38: extension section
- 40: first part
- 42: second part
- 44: connection hole
- 46: connection hole
- 48: reinforcement structure
- 50: rib
- 52: main rib
- 54: end rib
- 56: connection screw
- 57: hollow
- 58: support interface for supporting a spring
- 60: aerodynamic deflection feature
- 62: underfloor panel
- 64: cut-out
- 66: gap

## Claims

1. A link arm (20) for a chassis (14) of a vehicle (10), the link arm (20) comprising a first connection portion (30) for pivotably supporting the link arm (20) on a vehicle structure (22),
a second connection portion (30) for pivotably supporting the link arm (20) on the vehicle structure (22),
a body portion (34) structurally interconnecting the first connection portion (30) and the second connection portion (30),
wherein the body portion (34) comprises a first part (40) comprising a first material and being produced by a first manufacturing process and a second part (42) comprising a second material and being produced by a second manufacturing process,
wherein the first part (40) and the second part (42) are structurally connected such that the first part (40) and the second part (42) conjointly form the body portion (34), and wherein the first material is different from the second material and/or wherein the first manufacturing process differs from the second manufacturing process.

2. The link (20) arm of claim 1, wherein the first material is a metal material or a plastics material or a fiber-reinforced plastics material or a metal-reinforced plastics material and/or wherein the second material is a metal material or a plastics material or a fiber-reinforced plastics material or a metal-reinforced plastics material.

3. The link arm (20) of claim 1 or 2, wherein the first manufacturing process comprises casting or forging or pressing or molding or extruding and/or wherein the second manufacturing process comprises casting or forging or pressing or molding or extruding.

4. The link arm (20) of any one of the preceding claims, wherein the first part (40) and the second part (42) are structurally connected along an outer outline of the first part (40) and/or of the second part (42) and/or wherein the first part (40) and the second part (42) are structurally connected at a location remote from an outer outline of the first part (40) and/or the second part (42).

5. The link arm (20) of any one of the preceding claims, further comprising at least one connection interface (32) for pivotably supporting the link arm (20) on the vehicle structure (22), wherein the at least one connection interface (32) is conjointly formed by the first part (40) and the second part (42).

6. The link arm (20) of any one of the preceding claims, wherein a support interface (32) for supporting a spring is provided on the body portion (34).

7. The link arm (20) of any one of the preceding claims, wherein the first part (40) and the second part (42) enclose a hollow (57).

8. The link arm (20) of any one of the preceding claims, wherein the body portion (34) comprises an aerodynamic deflection feature (60).

9. The link arm (20) of any one of the preceding claims, wherein the first part (40) and/or the second part (42) comprises a plate-shaped portion comprising a reinforcement structure (48).

10. The link arm (20) of any one of the preceding claims, wherein the first part (40) and/or the second part (42) is tray-shaped or cup-shaped.

11. A chassis (14) for a vehicle (10), the chassis (14) comprising at least one link arm (20) according to any one of claims 1 to 10.

12. A vehicle (10) comprising a chassis (14) according to claim 11 and/or a link arm (20) according to any one of claims 1 to 10.

13. The vehicle (10) of claim 12, further comprising an underfloor panel (62) arranged adjacent to the link arm (20), wherein a gap (66) between the underfloor panel and the link arm (20) has a maximum width of 10 cm.

14. A method for manufacturing a link arm (20) for a chassis (14) of a vehicle (10), wherein the link arm (20) comprises a first connection portion (30) for pivotably supporting the link arm (20) on a vehicle structure (22), a second connection portion (30) for pivotably supporting the link arm (20) on a vehicle structure (22), and a body portion (34) structurally interconnecting the first connection portion (30) and the second connection portion (30), the method comprising:
- providing a first part (40) comprising a first material and being produced by a first manufacturing process,
- providing a second part (42) comprising a second material and being produced by a second manufacturing process, wherein the first material is different from the second material and/or wherein the first manufacturing process differs from the second manufacturing process, and
- structurally connecting the first part (40) and the second part (42) such that the first part (40) and the second part (42) conjointly form the body portion (34).

15. A use of a first part (40) comprising a first material and being produced by a first manufacturing process, and a second part (42) comprising a second material and being produced by a second manufacturing process, for forming a body portion (34) of a link arm (20) for a chassis (14) of a vehicle (10),
wherein the body portion (34) structurally interconnects a first connection portion (30) of the link arm (20) and a second connection portion (30) of the link arm (20), wherein each of the first connection portion (30) and the second connection portion (30) is configured for pivotably supporting the link arm (20) on a vehicle structure (22), and wherein the first material is different from the second material and/or wherein the first manufacturing process differs from the second manufacturing process.

## Amended claims

### Amended claims in accordance with Rule 137(2) EPC.

1. A link arm (20) for a chassis (14) of a vehicle (10), the link arm (20) comprising
a first connection portion (30) for pivotably supporting the link arm (20) on a vehicle structure (22),
a second connection portion (30) for pivotably supporting the link arm (20) on the vehicle structure (22),
a body portion (34) structurally interconnecting the first connection portion (30) and the second connection portion (30),
wherein the body portion (34) comprises a first part (40) comprising a first material and being produced by a first manufacturing process and a second part (42) comprising a second material and being produced by a second manufacturing process,
wherein the first part (40) and the second part (42) are structurally connected such that the first part (40) and the second part (42) conjointly form the body portion (34),
wherein the body portion (34) comprises an aerodynamic deflection feature (60), the aerodynamic deflection feature (60) is formed by a plate-shaped portion of the first part (40) and/or the second part (42), and
wherein the first material is different from the second material and/or wherein the first manufacturing process differs from the second manufacturing process.

2. The link (20) arm of claim 1, wherein the first material is a metal material or a plastics material or a fiber-reinforced plastics material or a metal-reinforced plastics material and/or wherein the second material is a metal material or a plastics material or a fiber-reinforced plastics material or a metal-reinforced plastics material.

3. The link arm (20) of claim 1 or 2, wherein the first manufacturing process comprises casting or forging or pressing or molding or extruding and/or wherein the second manufacturing process comprises casting or forging or pressing or molding or extruding.

4. The link arm (20) of any one of the preceding claims, wherein the first part (40) and the second part (42) are structurally connected along an outer outline of the first part (40) and/or of the second part (42) and/or wherein the first part (40) and the second part (42) are structurally connected at a location remote from an outer outline of the first part (40) and/or the second part (42).

5. The link arm (20) of any one of the preceding claims, further comprising at least one connection interface (32) for pivotably supporting the link arm (20) on the vehicle structure (22), wherein the at least one connection interface (32) is conjointly formed by the first part (40) and the second part (42).

6. The link arm (20) of any one of the preceding claims, wherein a support interface (32) for supporting a spring is provided on the body portion (34).

7. The link arm (20) of any one of the preceding claims, wherein the first part (40) and the second part (42) enclose a hollow (57).

8. The link arm (20) of any one of the preceding claims, wherein the first part (40) and/or the second part (42) comprises a plate-shaped portion comprising a reinforcement structure (48).

9. The link arm (20) of any one of the preceding claims, wherein the first part (40) and/or the second part (42) is tray-shaped or cup-shaped.

10. A chassis (14) for a vehicle (10), the chassis (14) comprising at least one link arm (20) according to any one of claims 1 to 9.

11. A vehicle (10) comprising a chassis (14) according to claim 11 and/or a link arm (20) according to any one of claims 1 to 9.

12. The vehicle (10) of claim 11, further comprising an underfloor panel (62) arranged adjacent to the link arm (20), wherein a gap (66) between the underfloor panel and the link arm (20) has a maximum width of 10 cm.

13. A method for manufacturing a link arm (20) for a chassis (14) of a vehicle (10), wherein the link arm (20) comprises a first connection portion (30) for pivotably supporting the link arm (20) on a vehicle structure (22), a second connection portion (30) for pivotably supporting the link arm (20) on a vehicle structure (22), and a body portion (34) structurally interconnecting the first connection portion (30) and the second connection portion (30), the method comprising:
- providing a first part (40) comprising a first material and being produced by a first manufacturing process,
- providing a second part (42) comprising a second material and being produced by a second manufacturing process, wherein the first material is different from the second material and/or wherein the first manufacturing process differs from the second manufacturing process, and
- structurally connecting the first part (40) and the second part (42) such that the first part (40) and the second part (42) conjointly form the body portion (34),
wherein the body portion (34) comprises an aerodynamic deflection feature (60), the aerodynamic deflection feature (60) is formed by a plate-shaped portion of the first part (40) and/or the second part (42).

14. A use of a first part (40) comprising a first material and being produced by a first manufacturing process, and a second part (42) comprising a second material and being produced by a second manufacturing process, for forming a body portion (34) of a link arm (20) for a chassis (14) of a vehicle (10), wherein the body portion (34) structurally interconnects a first connection portion (30) of the link arm (20) and a second connection portion (30) of the link arm (20), wherein each of the first connection portion (30) and the second connection portion (30) is configured for pivotably supporting the link arm (20) on a vehicle structure (22), and
wherein the first material is different from the second material and/or wherein the first manufacturing process differs from the second manufacturing process.
